(19) Europäisches Patentamt
European Patent Office
Office européen des brevets

(11) Veröffentlichungsnummer: **0 638 604 A1**

# (12) EUROPÄISCHE PATENTANMELDUNG

(21) Anmeldenummer: **94111383.9**

(22) Anmeldetag: **21.07.94**

(51) Int. Cl.6: **C08G 77/398**, C08K 5/00, C07F 15/00

(30) Priorität: **31.03.94 DE 4411444**
**22.07.93 DE 4324685**

(43) Veröffentlichungstag der Anmeldung:
**15.02.95 Patentblatt 95/07**

(84) Benannte Vertragsstaaten:
**AT BE CH DE ES FR GB IT LI NL**

(71) Anmelder: **Wacker-Chemie GmbH**
**Hanns-Seidel-Platz 4**
**D-81737 München (DE)**

(72) Erfinder: **Dauth, Jochen, Dr.**
**Piracher Strasse 78**
**D-84489 Burghausen (DE)**
Erfinder: **Peetz, Udo**
**Kreuzfelsen 2**
**D-84489 Burghausen (DE)**
Erfinder: **Deubzer, Bernward, Dr.**
**Virchowstrasse 14**
**D-84489 Burghausen (DE)**
Erfinder: **Bindl, Hans, Dr.**
**Carl-Bosch-Strasse 14**
**D-84489 Burghausen (DE)**

## (54) Homogene Hydrosilylierungskatalysatoren.

(57) Übergangsmetallhaltige Organosiloxane aus mindestens drei Organosiloxaneinheiten, welche mindestens einen chemisch über Liganden, die ausgewählt werden aus Amino-, Phosphino- oder Sulfidogruppen gebundenen Übergangsmetallkomplex von Pt, Pd, Rh, Ru, Os oder Ir enthalten, wobei die Organosiloxane, welche ausschließlich über Aminoliganden gebundene Pt(0)-Komplexe enthalten, ausgenommen sind, werden als homogene Hydrosilylierungskatalysatoren eingesetzt.

EP 0 638 604 A1

Die Erfindung betrifft übergangsmetallhaltige Organosiloxane, ein Verfahren zu deren Herstellung, ein Hydrosilylierungsverfahren in Gegenwart der übergangsmetallhaltigen Organosiloxane und Zusammensetzungen, welche die übergangsmetallhaltigen Organosiloxane als homogene Hydrosilylierungskatalysatoren enthalten.

Es ist bekannt, daß die Addition von Si-gebundenem Wasserstoff an eine aliphatische Mehrfachbindung, die als Hydrosilylierung bezeichnet wird, durch Übergangsmetallkatalysatoren, insbesondere Platinverbindungen, gefördert werden kann. Beispielsweise sind in der EP-A-546 716 über Aminogruppen an Polysiloxanharze gebundene Platinzentren und deren Verwendung als heterogene Hydrosilylierungskatalysatoren beschrieben. Heterogene Katalysatoren müssen nach der Umsetzung aus dem Produkt entfernt werden, da sie dessen Eigenschaften, wie Transparenz und mechanische Eigenschaften verschlechtern.

Polysiloxangebundene Platinkatalysatoren für die Hydrosilylierung sind aus US-A 3 795 656 bekannt. Gemäß dem dort beschriebenen Verfahren wird in an sich bekannter Weise Chlorplatinsäure mit funktionelle Aminogruppen aufweisenden Organosiliciumverbindungen zu Ammonium-Platin(IV)-Addukte enthaltenden Organosiliciumverbindungen umgesetzt. Diese Organosiliciumverbindungen besitzen eine stark polare, salzartige Struktur und verklumpen oder verfestigen sich, wenn sie in reiner Form vorliegen. Sie sind deshalb nur sehr schwer redispergierbar und nur als Lösungen homogen in Silicone einarbeitbar. Ferner ist die Herstellung dieser Organosiliciumverbindungen aus stark polarer Chlorplatinsäure und unpolarer aminofunktioneller Organosiliciumverbindung aufgrund von Löslichkeitsunterschieden problematisch. In US-A 4 398 010 ist die Reduktion der vorstehenden Ammonium-Platin(IV)Addukte enthaltenden Organosiliciumverbindungen beschrieben. Dabei werden die Platin(IV)zentren in Gegenwart von Basen zur Oxidationsstufe Null reduziert. Bei der Reduktion fallen Feststoffe an, die nur als Lösungen als homogene Hydrosilylierungskatalysatoren eingesetzt werden können.

In C. Hu et al., J. Organomet. Chem. 1986, 307 (1), 115 sind für die Chemotherapie zur Behandlung von Krebs vorgesehene Platinkomplexe beschrieben, die als Liganden ethylendiaminofunktionelle Silane oder Disiloxane und Cl aufweisen. Bei der Synthese wird von dem salzartigen Kaliumtetrachloroplatinat ausgegangen und deshalb in Wasser gearbeitet. Beim Einsatz von unpolareren höhermolekularen aminofunktionellen Siloxanen versagt das Verfahren.

Es bestand die Aufgabe homogen einsetzbare Hydrosilylierungskatalysatoren bereitzustellen, die das Produkt der Hydrosilylierungsreaktion weder verfärben, noch trüben und sich auf einfache Weise herstellen lassen.

Die Erfindung betrifft übergangsmetallhaltige Organosiloxane aus mindestens drei Organosiloxaneinheiten, welche mindestens einen chemisch über Liganden, die ausgewählt werden aus Amino-, Phosphino- oder Sulfidogruppen gebundenen Übergangsmetallkomplex von Pt, Pd, Rh, Ru, Os oder Ir enthalten, wobei die Organosiloxane, welche ausschließlich über Aminoliganden gebundene Pt(0)-Komplexe enthalten, ausgenommen sind.

Die Erfindung betrifft auch ein Hydrosilylierungsverfahren, wobei

(A) Verbindungen, die Reste mit aliphatischen Kohlenstoff-Kohlenstoff-Mehrfachbindungen aufweisen, mit

(B) Si-gebundenen Wasserstoffatome aufweisenden Verbindungen, die ausgewählt werden aus Silanen oder Siloxanen, oder anstelle von (A) und (B)

(C) Verbindungen, die aliphatische Kohlenstoff-Kohlenstoff-Mehrfachbindungen und Si-gebundene Wasserstoffatome aufweisen, in Gegenwart von

(D) erfindungsgemäßen übergangsmetallhaltigen Organosiloxanen als Hydrosilylierungskatalysator umgesetzt werden.

Die übergangsmetallhaltigen Organosiloxane (D) isomerisieren nicht oder nur in sehr geringem Maße Verbindungen (A), die Reste mit aliphatischen Kohlenstoff-Kohlenstoff-Mehrfachbindungen aufweisen.

Die übergangsmetallhaltigen Organosiloxane (D) sind thermisch sehr stabil und verfärben keine Hydrosilylierungsprodukte durch kolloidal anfallendes Übergangsmetall bei der Hydrosilylierung.

Die übergangsmetallhaltigen Organosiloxane (D) können bei allen Verfahren zur Umsetzung von Si-gebundene Wasserstoffatome aufweisenden Verbindungen mit aliphatischen Mehrfachbindungen aufweisenden organischen Verbindungen eingesetzt werden, bei denen auch bisher die Anlagerung von Si-gebundenem Wasserstoff an aliphatische Mehrfachbindung fördernde Katalysatoren eingesetzt werden konnten. Unter organischen Verbindungen (A) mit aliphatischen Mehrfachbindungen sind auch organische Verbindungen mit cycloaliphatischen Mehrfachbindungen zu verstehen.

Beispiele für aliphatische Mehrfachbindungen aufweisende Verbindungen (A) sind Verbindungen mit aliphatischer Kohlenstoff-Kohlenstoff-Doppelbindung, wie Styrol, Allylglycidether, Allylcyanid, Allylacetat, Allylbernsteinsäureanhydrid, Glycolmonoallylether, Allylmethacrylat, Allylamin und Cyclohexen und Verbindungen mit aliphatischer Kohlenstoff-Kohlenstoff-Dreifachbindung, wie Acetylen und Butinol.

(A) Verbindungen, die Reste mit aliphatischen Kohlenstoff-Kohlenstoff-Mehrfachbindungen aufweisen, sind vorzugsweise Organopolysiloxane, die Reste mit aliphatischen Kohlenstoff-Kohlenstoff-Mehrfachbindungen aufweisen.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel 1,

$$R^1_aR^2_bSiO_{\frac{4-a-b}{2}} \qquad (1),$$

wobei

**R¹** einen einwertigen von aliphatischen Kohlenstoff-Kohlenstoff-Mehrfachbindungen freien Kohlenwasserstoffrest mit 1 bis 18 Kohlenstoffatomen je Rest und

**R²** einen einwertigen Kohlenwasserstoffrest mit aliphatischer Kohlenstoff-Kohlenstoff-Mehrfachbindung mit 2 bis 8 Kohlenstoffatomen je Rest bedeutet,

**a** 0, 1, 2 oder 3,

**b** 0, 1 oder 2

und die Summe **a+b** 0, 1, 2 oder 3 ist,
mit der Maßgabe, daß durchschnittlich mindestens 2 Reste **R²** je Molekül vorliegen, verwendet.

Die Organopolysiloxane (A) besitzen vorzugsweise eine durchschnittliche Viskosität von 100 bis 10 000 mPa•s bei 25 °C.

Beispiele für Kohlenwasserstoffreste **R¹** sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste **R²** sind Alkenylreste, wie der Vinyl-, 5-Hexenyl-, 1-Propenyl-, Allyl-, 1-Butenyl- und 1-Pentenylrest und Alkinylreste, wie der Ethinyl-, Propargyl- und 1-Propinylrest.

Beispiele für Si-gebundene Wasserstoffatome aufweisende Siliciumverbindungen (B) sind Silane mit einem Si-gebundenen Wasserstoffatom je Molekül, wie Trichlorsilan, Dimethylchlorsilan, Dimethylethoxysilan, Methyldiethoxysilan, Methyldichlorsilan und Triethoxysilan, und Organopolysiloxane mit mindestens einem Si-gebundenen Wasserstoffatom je Molekül, wie α,ω-Dihydrogen[dimethylpolysiloxan], Tetramethyldisiloxan, Tetramethylcyclotetrasiloxan, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten und Trimethylsiloxyhydrogensilan.

Als Organopolysiloxane (B), die Si-gebundene Wasserstoffatome aufweisen, werden vorzugsweise lineare, cyclische oder verzweigte Organopolysiloxane aus Einheiten der allgemeinen Formel 2,

$$R^1_cH_dSiO_{\frac{4-c-d}{2}} \qquad (2),$$

wobei

**R¹** die oben dafür angegebene Bedeutung hat,

**c** 0, 1, 2 oder 3,

**d** 0, 1 oder 2

und die Summe von **c+d** 0, 1, 2 oder 3 ist,
mit der Maßgabe, daß durchschnittlich mindestens 2 Si-gebundene Wasserstoffatome je Molekül vorliegen, verwendet.

Die Organopolysiloxane (B) besitzen vorzugsweise eine durchschnittliche Viskosität von 10 bis 1 000 mPa•s bei 25 °C.

Als Verbindungen (C), die aliphatische Kohlenstoff-Kohlenstoff-Mehrfachbindungen und Si-gebundene Wasserstoffatome aufweisen und anstelle von Verbindungen (A) und (B) verwendet werden können, werden vorzugsweise Organopolysiloxane, insbesondere solche aus Einheiten der allgemeinen Formeln 3 bis 5

$$R^1_eSiO_{\frac{4-e}{2}}, \quad R^1_fR^2SiO_{\frac{3-f}{2}} \quad \text{und} \quad R^1_gHSiO_{\frac{3-g}{2}}, \qquad (3,4,5)$$

wobei

**R¹** und **R²** die oben dafür angegebene Bedeutung haben,
**e** 0, 1, 2 oder 3,
**f** 0, 1 oder 2,
**g** 0, 1 oder 2 ist,

mit der Maßgabe, daß je Molekül durchschnittlich mindestens 2 Reste **R¹** und durchschnittlich mindestens 2 Si-gebundene Wasserstoffatome vorliegen, verwendet.

Beispiele für Organopolysiloxane (C) sind solche aus $SiO_{4/2}$-, $R^1_3$ $SiO_{1/2}$-, $R^1_2$ $R^2SiO_{1/2}$- und $R^1_2$ $HSiO_{1/2}$-Einheiten, sogenannte MQ-Harze, wobei diese Harze T-Einheiten ($R^1SiO_{3/2}$) und D-Einheiten ($R^1_2$ SiO) enthalten können.

Die Organopolysiloxane (C) besitzen vorzugsweise eine durchschnittliche Viskosität von 100 bis 100 000 mPa•s bei 25 °C bzw. sind Feststoffe mit Molekulargewichten von 5 000 bis 50 000 g/mol.

Eine besonders gute Löslichkeit in Siliconsystemen weisen die Organosiloxane (D) auf, welche mindestens 5, vorzugsweise 35, insbesondere 100 Organosiloxaneinheiten pro Übergangsmetallatom aufweisen.

Ab einer Molmasse von 1 000 g/mol sind die Flüchtigkeit und Migrationsfähigkeit der als Hydrosilylierungskatalysatoren eingesetzten Organosiloxane (D) sehr gering.

Die Organosiloxane (D) werden vorzugsweise in Mengen von 1 bis 1 000 Gew.-ppm (Gewichtsteilen je Million Gewichtsteilen), bevorzugt 10 bis 100 Gew.-ppm, jeweils berechnet als elementares Übergangsmetall Pt, Pd, Ru, Rh, Os oder Ir und bezogen auf das Gesamtgewicht der Organopolysiloxane (A) und (B) bzw. auf das Gesamtgewicht der Organopolysiloxane (C), eingesetzt.

Als übergangsmetallhaltige Organosiloxane (D) sind Organosiloxane bevorzugt, welche mindestens einen chemisch gebundenen Übergangsmetallkomplex von Pt, Pd, Rh, Ru, Os oder Ir enthalten und welche aus mindestens drei Einheiten der allgemeinen Formel 6,

$$G_mR_nSiO_{\frac{4-n-m}{2}} \qquad (6),$$

aufgebaut sind, in der

**G** einen Rest der allgemeinen Formel 7,

$MY_hZ_i$ (7),

bedeutet, wobei

**M** Pt, mit Ausnahme von Pt(0), Pd, Rh, Ru, Os oder Ir ist,
**Y** gleich oder verschieden ist und einen Liganden ausgewählt aus der Gruppe von Cl, Br, I, $NH_3$, $PR_3$, H, CO, 1,5-Cyclooctadien, Pyridin, Bipyridin, Acetat, Acetylacetonat, Phenylnitril, Ethylendiamin, Acetonitril, 2,5-Norbornadien, Nitrat, Nitrit, $H_2O$, Benzol, Diphenylphosphinoethan, 1,3-Divinyl-1,1,3,3-tetramethyldisiloxan und Alkene mit 1 bis 18 Kohlenstoffatomen,
**Z** gleich oder verschieden ist und einen Ligandenrest ausgewählt aus der Gruppe von Sp-$NR^3_2$, Sp-$NR^3(R^4)NR^3_2$, Sp-4-Pyridin, Sp-4-Bipyridin, Sp-$PR^3(R^4)PR^3_2$, Sp-$PR^3_2$, Sp-$POR^3_2$, Sp-$P(OR^3)_2$ und Sp-$SR^3$,
**R³** ein Wasserstoffatom oder einen Rest **R**,
**R⁴** einen zweiwertigen Kohlenwasserstoffrest mit 1 bis 8 Kohlenstoffatomen je Rest,

**Sp** einen zweiwertigen, SiC-gebundenen, gegebenenfalls substituierten Kohlenwasserstoffrest mit 1 bis 18 Kohlenstoffatomen je Rest,

**R** einen einwertigen, gegebenenfalls substituierten Kohlenwasserstoffrest mit 1 bis 18 Kohlenstoffatomen je Rest,

**h** eine ganze Zahl von 1 bis 8,

**i** 1, 2, 3 oder 4 und

**m** und **n** gleich oder verschieden sind, jeweils 0 oder eine ganze Zahl von 1 bis 3 bedeuten und $n + m \geqq 1$ sind, mit der Maßgabe, daß mindestens ein Rest G im Organosiloxan vorhanden ist.

Beispiele für Kohlenwasserstoffreste **R** und **R³** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; und Octadecylreste, wie der n-Octadecylrest; Cycloalkylreste, wie der Cyclohexylrest; Alkenylreste, wie der Vinyl-, 1-Propenyl-, 1-Butenyl-, 2-Butenyl-, Allyl-, Isobutenyl-, 1-Pentenyl- und 2-Methyl-1-butenylrest; Alkinylreste, wie der Ethinyl-, Propargyl-, 1-Propinyl- und 1-Butinylrest, und Aralkylreste, wie der Benzylrest und der $\alpha$-und $\beta$-Phenylethylrest; wobei Alkylreste bevorzugt sind.

Beispiele für substituierte Kohlenwasserstoffreste sind Halogenalkylreste, wie der 3,3,3-Trifluor-n-propylrest, der 2,2,2,2',2',2'-Hexafluorisopropylrest, der Heptafluorisopropylrest, der 3-Chlor-n-propylrest, 2-Ethylbromid und 3-Propylbromid und Halogenarylreste, wie der o-, m- und p-Chlorphenylrest, o-, m- und p-Bromphenylrest.

Beispiele für zweiwertige Kohlenwasserstoffreste **Sp** sind gesättigte Alkylenreste wie der Methylen- und Ethylenrest sowie Propylen-, Butylen-, Pentylen-, Hexylen-, Cyclohexylen- und Octadecylenreste oder ungesättigte Alkylen- oder Arylenreste wie der Hexenylenrest und Phenylenreste.

Beispiele für zweiwertige Kohlenwasserstoffreste **R⁴** sind die für **Sp** aufgeführten Beispiele mit 1 bis 8 Kohlenstoffatomen.

Beispiele für bevorzugte Alkene als Liganden **Y** sind 1-Octen, 1-Hexen und 2-Buten.

Bevorzugte Ligandenreste **Z** sind $Sp\text{-}NR^3_2$ und $Sp\text{-}NR^3(R^4)NR^3_2$, wobei **R³** ein Wasserstoffatom oder einen Alkylrest mit 1 bis 6 Kohlenstoffatomen und **R⁴** einen Alkylenrest bedeuten.

**i** ist vorzugsweise 1 und **n** ist vorzugsweise 2.

Insbesondere sind die Organosiloxane (D) linear und vorzugsweise mit $\mathbf{G_m}$ endgestoppert.

Als Übergangsmetalle **M** sind Pt, Pd und Rh bevorzugt.

Die Erfindung betrifft auch eine übergangsmetallhaltige Organopolysiloxanzusammensetzung, enthaltend

(A) Verbindungen, die Reste mit aliphatischen Kohlenstoff-Kohlenstoff-Mehrfachbindungen aufweisen,

(B) Si-gebundenen Wasserstoffatomen aufweisende Verbindungen, die ausgewählt werden aus Silanen oder Siloxanen, oder anstelle von (A) und (B)

(C) Verbindungen die aliphatische Kohlenstoff-Kohlenstoff-Mehrfachbindungen und Si-gebundene Wasserstoffatome aufweisen, und

(D) als Hydrosilylierungskatalysator übergangsmetallhaltige Organosiloxane, welche mindestens einen chemisch über Liganden, die ausgewählt werden aus Amino-, Phosphino- oder Sulfidogruppen gebundenen Übergangsmetallkomplex von Pt, Pd, Rh, Ru, Os oder Ir mit Ausnahme von Pt(0), enthalten.

Die beim vorstehenden Hydrosilylierungsverfahren enthaltenen Komponenten (A), (B), (C) und (D) sind auch bei der Organopolysiloxanzusammensetzung bevorzugt.

Obwohl nicht bevorzugt, können bei dem Hydrosilylierungsverfahren und bei der Organopolysiloxanzusammensetzung Inhibitoren mitverwendet werden. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25 °C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren gemäß US-A 2,476,166, wie eine Mischung aus Diallylmaleinat und Vinylacetat, und Inhibitoren gemäß US-A 4,504,645, wie Maleinsäuremonoester.

Die Erfindung betrifft auch ein Verfahren zur Herstellung von übergangsmetallhaltigen Organosiloxanen (D1), welche mindestens einen chemisch über Liganden, die ausgewählt werden aus Amino-, Phosphino- oder Sulfidogruppen gebundenen Übergangsmetallkomplex von Pt, Pd, Rh, Ru, Os oder Ir enthalten,
wobei eine Übergangsmetallverbindung der Zentralatome Pt, Pd, Rh, Ru, Os und Ir, welche mindestens einen schwachen Liganden besitzt, der nach der spektrochemischen Reihe unterhalb von Amino-, Phosphino-und Sulfidoliganden steht, mit einem Organosiloxan aus mindestens drei Organosiloxaneinheiten, das mindestens eine gebundene Amino-, Phosphino- oder Sulfidogruppe besitzt, umgesetzt wird.

Der am Übergangsmetallzentralatom gebundene, nach der spektrochemischen Reihe schwache Ligand verbessert die Löslichkeit der Übergangsmetallverbindung und kann leicht durch den starken, organosiloxangebundenen Liganden ausgetauscht werden. Dadurch können die Organosiloxane (D1) auf einfache Weise in guten Ausbeuten hergestellt werden, beispielsweise durch einfaches Vermischen der Übergangsmetallverbindung mit dem Organosiloxan, das mindestens eine gebundene Amino-, Phosphino- oder Sulfidogruppe besitzt.

Die bei dem Verfahren nicht ausgetauschten Liganden an der Übergangsmetallverbindung der Zentralatome Pt, Pd, Rh, Ru, Os und Ir, welche mindestens einen schwachen Liganden besitzt, können sowohl schwache, als auch starke Liganden sein.

In einem bevorzugten Verfahren zur Herstellung von Organosiloxanen (D1), welche aus mindestens drei Einheiten der allgemeinen Formel 8

$$A_mR_nSiO_{\frac{4-n-m}{2}} \quad (8),$$

aufgebaut sind, in der

**A** einen Rest der allgemeinen Formel 9,

$$M^1Y_hZ_i \quad (9),$$

bedeutet,

werden Übergangsmetallverbindungen der allgemeinen Formel 10,

$$M^1Y_hX_k \quad (10),$$

mit Organosiloxanen aus mindestens drei Einheiten der allgemeinen Formel 11,

$$Z_mR_nSiO_{\frac{4-n-m}{2}} \quad (11),$$

umgesetzt, wobei

- **M¹** Pt, Pd, Rh, Ru, Os oder Ir ist,
- **X** gleich oder verschieden ist und einen Liganden ausgewählt aus der Gruppe von Cl, Br, I, H, CO, 1,5-Cyclooctadien, Acetat, Acetylacetonat, Phenylnitril, Acetonitril, 2,5-Norbornadien, Nitrat, Nitrit, $H_2O$, Benzol, Diphenylacetylen, Ethylen, 1-Octen, 1-Hexen und 1,3-Divinyl-1,1,3,3-tetramethyldisiloxan,
- **k** 1, 2, 3 oder 4 und
- **Y**, **Z**, **R**, **h**, **i**, **m** und **n** die vorstehenden Bedeutungen aufweisen.

Bevorzugte schwache Liganden **X** sind Cyclooctadien, Norbornadien, 1-Octen, Ethylen und Diphenylacetylen.

Beispiele für Übergangsmetallverbindungen, die bei dem Verfahren der Erfindung eingesetzt werden können, sind $PtCl_2$, $PtJ_2$, $[(C_6H_5)_3P]_2PtCl_2$, $[(C_2H_5)_3P]_2PtCl_2$, $PtCl_4$, $Pt(H_2NCH_2CH_2NH_2)Cl_2$, $Pt(NH_3)_2Cl_2$, $PtBr_2$, 1,5-Cyclooctadien•$PtCl_2$, $Pd(CH_3CN)_2Cl_2$, $PdBr_2$, 1,5-Cyclooctadien•$PdCl_2$, $[(C_6H_5)_3P]_2PdCl_2$, $PdCl_2$, $RuCl_3$, $Ru(NH_3)_6Cl_2$, $[(C_6H_5)_3P]_3RuCl_2$, $RhCl_3$, $RhBr_3$, $[(C_6H_5)_3P]_3RhCl$, (1,5-Cyclooctadien)$_2$Pt, Bis-(diphenylacetylen)platin, Umsetzungsprodukte von Übergangsmetallhalogeniden mit Olefinen, Ethylendichloroplatin, 1,3-Divinyl-1,1,3,3-tetramethyldisiloxanplatinkomplex (z.B. $Pt_2$[1,3-divinyl-1,1,3,3-tetramethyldisiloxan]$_3$),Pd[bis-(1,2-diphenyl-phosphinoethan)], Hexarhodiumhexadecacarbonyl und Trirutheniumdodecacarbonyl, wobei 1,5-Cyclooctadien•$PtCl_2$,1,5-Cyclooctadien•$PdCl_2$, $Ru(NH_3)_6Cl_2$, (1,5-Cyclooctadien)$_2$Pt, Ethylendichloroplatin, 1,3-Divinyl-1,1,3,3-tetramethyldisiloxanplatinkomplex, Bis(diphenylacetylen)platin, sowie Umsetzungsprodukte von Übergangsmetallhalogeniden mit Olefinen bevorzugt sind.

Besonders bevorzugte Übergangsmetallverbindungen sind 1,5-Cyclooctadien•$PtCl_2$, Bis-(diphenylacetylen)platin und die Umsetzungsprodukte von 1-Octen mit Platinchloriden. Als Übergangsmetall ist Platin in der Oxidationsstufe II bevorzugt.

Das Verfahren zur Herstellung der Organosiloxane (D1) wird vorzugsweise in Gegenwart von organischen Lösungsmitteln, wie n-Hexan, Toluol, Methylenchlorid, Chloroform, Aceton, Methanol, Ethanol, Isopropanol oder vorzugsweise Tetrahydrofuran (THF), durchgeführt.

Das Verfahren zur Herstellung der Organosiloxane (D1) wird vorzugsweise bei Temperaturen von 20 ° C bis 120 ° C, und vorzugsweise beim Druck der umgebenden Atmosphäre durchgeführt. Das organische Lösungsmittel bzw. das Gemisch aus organischem Lösungsmittel und ausgetauschtem Ligand wird vorzugsweise nach der Umsetzung entfernt.

Weitere vorhandene Liganden am Übergangsmetall der Organosiloxane (D1) können in einer nachfolgenden polymeranalogen Reaktion durch andere Liganden ersetzt werden. So können z. B. vorhandene Chloroliganden durch Acetylacetonato-, Glykolat-, Oxalatliganden substituiert werden.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20 ° C;
d) "d. Th." die Abkürzung für "der Theorie".

Beispiele

**Herstellung der Polymerkatalysatoren**

Beispiel 1

50,90 g Cyclooctadienplatindichlorid (136 mmol Platin) wurden in 2,8 Liter THF gelöst und bei 64°C vorgelegt. Innerhalb 1 Stunde wurden dann 362,7 g eines $\alpha,\omega$-Aminoethylaminopropylgruppen endgestopperten Polydimethylsiloxanes (0,75 mmol Aminfunktion pro Gramm) der Viskosität 200 mPa.s zudosiert und weitere 2 Stunden unter Rückfluß gerührt.

Nach dem Abkühlen auf Raumtemperatur wurde die gelbe Flüssigkeit filtriert.

Man erhielt 2764,9 g eines klaren Produktes (Polymerkatalysator 1) mit 0,72 Gew.-% Platin (75% Ausbeute d. Th. bezogen auf Platin).

Beispiel 2

31,46 g einer Lösung von 1-Octenplatindichlorid in 1-Octen mit 3,8 Gew.-% Platin (6,127 mmol Platin) wurden mit 200 ml Toluol gemischt und anschließend mit 46,94 g eines $\alpha,\omega$-Aminoethylaminopropylgruppen endgestopperten Polydimethylsiloxanes (0,258 mmol Aminfunktion pro Gramm) der Viskosität 691 mPa.s versetzt.

Die Lösung wurde 8 Stunden bei 70°C gerührt, auf Raumtemperatur abgekühlt und filtriert. Das Filtrat wurde bei 60°C im Hochvakuum bis zur Gewichtskonstanz eingeengt. Man erhielt 75,2 g eines dunkelgelben, hochviskosen Produktes (Polymerkatalysator 2) mit 1,54 Gew.-% Platin (97% Ausbeute d. Th. bezogen auf Platin).

Beispiel 3

3,379 g Bis(diphenylacetylen)Platin (6,127 mmol Platin) wurden in 200 ml Toluol gelöst und mit 46,94 g eines $\alpha,\omega$-Aminoethylaminopropylgruppen endgestopperten Polydimethylsiloxanes (0,258 mmol Aminfunktion pro Gramm) der Viskosität 691 mPa.s versetzt. Die Lösung wurde 8 Stunden bei 70°C gerührt, auf Raumtemperatur abgekühlt und filtriert. Das Filtrat wurde bei 60°C im Hochvakuum bis zur Gewichtskonstanz eingeengt. Man erhielt 48,6 g eines gelben, hochviskosen Produktes (Polymerkatalysator 3) mit 1,35 Gew.-% Platin (85% Ausbeute d. Th. bezogen auf Platin).

Beispiel 4

3,58 g Cyclooctadienplatindichlorid (9,56 mmol Platin) wurden in 50 ml THF gelöst und mit 5,22 g eines $\alpha,\omega$-Aminopropylgruppen endgestopperten Polydimethylsiloxanes (1,83 mmol Aminfunktion pro Gramm) der Viskosität 14 mPa.s versetzt. Die Lösung wurde 6 Stunden bei 64°C gerührt, auf Raumtemperatur abgekühlt und filtriert. Das Filtrat wurde bei 60°C im Hochvakuum bis zur Gewichtskonstanz eingeengt. Man erhielt 6,82 g eines gelben, spröden Produktes (Polymerkatalysator 4) mit 26,2 Gew.-% Platin (96% Ausbeute d. Th. bezogen auf Platin).

Beispiel 5

0,757 g Dichlorocyclooctadienpalladium (2,65 mmol Palladium) wurden in 50 ml THF gelöst und mit 7,06 g eines α,ω-Aminoethylaminopropylgruppen endgestopperten Polydimethylsiloxanes (0,75 mmol Aminfunktion pro Gramm) der Viskosität 200 mPa.s versetzt. Die Lösung wurde 6 Stunden bei 64°C unter Rückfluß gerührt, auf Raumtemperatur abgekühlt und filtriert.

Das Filtrat wurde bei 60°C im Hochvakuum bis zur Gewichtskonstanz eingeengt. Man erhielt 7,2 g eines hochviskosen, hellbraunen Produktes (Polymerkatalysator 5) mit 3,5 Gew.-% Palladium (88% Ausbeute d. Th. bezogen auf Palladium).

Beispiel 6

5,09 g Cyclooctadienplatindichlorid (13,6 mmol Platin) wurden in 50 ml THF gelöst und mit 36,27 g eines α,ω-Aminoethylaminopropylgruppen endgestopperten Polydimethylsiloxanes (0,75 mmol Aminfunktion pro Gramm) der Viskosität 200 mPa.s versetzt. Die Lösung wurde 6 Stunden bei 64°C gerührt, 3,76 g (27,2 mmol) Kaliumacetylacetonat zugegeben und weitere 6 Stunden bei 64°C zum Sieden erhitzt. Nach der Filtration bei Raumtemperatur wurde das Filtrat bei 60°C Hochvakuum bis zur Gewichtskonstanz eingeengt. Man erhielt 34,3 g eines gelben, spröden Produktes (Polymerkatalysator 6) mit 6,8 Gew.-% Platin (88% Ausbeute d. Th. bezogen auf Platin).

**Hydrosilylierung**

Beispiel 7

45,75 mg Polymerkatalysator 2, dessen Herstellung in Beispiel 2 beschrieben wurde, wurden in 1 ml Toluol gelöst und dann zu 6,83 g α,ω-Divinyldimethylpolysiloxan mit einer Viskosität von 500 mPa.s bei 25°C gegeben. Das Lösungsmittel wurde bei Raumtemperatur unter reduziertem Druck entfernt. Zur verbleibenden Reaktionsmischung wurden 0,17 g eines Mischpolymerisats aus Trimethylsiloxan- und Hydrogenmethylsiloxaneinheiten mit einer Viskosität von 33 mPa.s bei 25°C, das 1,12 Gew.-% Si-gebundenen Wasserstoff enthält, gegeben, so daß die Mischung 100 Gew.-ppm Platin, berechnet als Element, enthielt. Die gesamte Mischung war bei Raumtemperatur 2,75 Stunden stabil. Nach 6,3 Minuten Erwärmen bei 60°C konnte eine komplette Vernetzung erzielt werden. Man erhält ein transparentes, in organischen Lösungsmitteln unlösliches Produkt.

Beispiel 8

140 g (0,85 mol) Hydrogentriethoxysilan wurden mit 100 g (0,88 mol) Allylglycidether gemischt und 10 g dieser Mischung wurden mit 141,2 mg Polymerkatalysator 6 in einem Reaktionsgefäß bei 95°C unter Normaldruck vorgelegt.

Beim Zutropfen der restlichen oben genannten Mischung innerhalb von 70 Minuten stieg die Temperatur bis auf 150°C an. Nach vollständiger Zugabe wird die Reaktionsmischung noch 30 Minuten bei 150°C gerührt. Nach der Destillation wurde 3-Glycidoxypropyltriethoxysilan als farbloses, flüssiges Produkt in 75,3 % Ausbeute erhalten.

Beispiel 9

180 g eines Mischpolymerisats aus Trimethylsiloxan- und Hydrogenmethylsiloxaneinheiten mit einer Viskosität von 24,4 mPa.s bei 25°C, das 1,60 Gew.-% Si-gebundenen Wasserstoff enthält, wurden mit 32,0 g (0,271 mol) α-Methylstyrol und 0,51 g Polymerkatalysator 1, dessen Herstellung in Beispiel 1 beschrieben wurde, unter Rühren und Stickstoffüberlagerung auf 120°C aufgeheizt. Anschließend dosierte man 31,4 g (0,266 mol) α-Methylstyrol innerhalb von 10 Minuten zu und ließ 1,5 Stunden nachreagieren. Nun tropfte man 493 g (2,929 mol) 1-Dodecen innerhalb von 30 Minuten zu und rührt 1 Stunde bei 120°C nach. Zur Entfernung von flüchtigen Bestandteilen wurde das Reaktionsgemisch bei 160°C im Hochvakuum 4 Stunden ausgeheizt. Nach der Filtration erhielt man 633 g (85,9 % d. Th.) eines klaren Öles mit einer Viskosität von 1200 mPa.s und einer Aphafarbzahl von 50 nach DIN ISO 6271.

Beispiel 10

17,9 g (0,07 mol) 10-Undecensäuretrimethylsilylester wurden zusammen mit 40 g eines Mischpolymerisats aus Trimethylsiloxan-, Dimethylsiloxan- und Methylsiloxaneinheiten mit einer Viskosität von 238 mPa•s bei 25°C, das 0,025 Gew.-% Si-gebundenen Wasserstoff enthielt und 242,1 mg Polymerkatalysator 3, dessen Herstellung in Beispiel 3 beschrieben ist, unter Rühren und Schutzgas auf 100°C aufgeheizt. Anschließend wurden weitere 160 g des o.g. Mischpolymerisats im Verlauf von 1 Stunde zudosiert. Nach 1 Stunde Reaktionszeit bei einer Temperatur von 100°C wurden erneut 80,7 mg Polymerkatalysator 3 zugesetzt und eine weitere Stunde bei 100°C nachreagiert. Man erhielt 260 g (99 % d. Th.) eines klaren Öles mit einer Viskosität von 520 mPa•s bei Raumtemperatur und einer Aphafarbzahl von 150 nach DIN ISO 6271.

Vergleichsbeispiel 11

A) Polysiloxangebundener Platinkatalysator analog US-A 3,795,656, der analog US-A 4,398,010 als Zwischenprodukt eingesetzt wird.

10 g eines $\alpha,\omega$-(Aminomethylaminopropyl)-polydimethylsiloxans der mittleren Kettenlänge 70, der Aminzahl 0,75 und der Viskosität 119 $mm^2/s$ wurden mit 1,8 g Hexachlorplatinsäure ($H_2PtCl_6$ x $H_2O$; Pt: 40 Gew.-%) in einem Gemisch von 125 g Toluol und 20 g Ethanol 2 Stunden bei 25°C gerührt. Trotz der großen Lösungsmittelmenge stellte sich keine vollständig homogene Lösung ein. Die orange Mischung enthielt gelartige Partikel. Mit o.g. Menge und Zusammensetzung des Lösungsmittelgemisches ließ sich noch das beste Lösungsverhalten erzielen.

Nach Evaporation des Lösungsmittelgemisches bei 30°C / 1 mbar erhielt man 11,8 g eines orangen Feststoffs. Das Einengen gestaltete sich extrem schwierig, da starke Schaumbildung auftrat.

B) Polysiloxangebundener Platinkatalysator analog US-A 4,398,010 durch Umsetzung des Produktes aus A) mit Divinyltetramethyldisiloxan und $NaHCO_3$ in Ethanol

Die Einsatzverhältnisse der Edukte sind analog US-A 4,398,010 gewählt.

11,8 g des Produktes aus A) wurden in 11,8 g Ethanol aufgeschlämmt, da sich keine homogene Lösung bildete mit 0,35 g Natriumhydrogencarbonat und 1,2 g Divinyltetramethyldisiloxan versetzt und 2 Stunden unter Rückfluß gerührt. Anschließend wurde ca. 15 Stunden bei Raumtemperatur nachgerührt. Man erhielt eine orange, inhomogene Mischung. Durch Zugabe von ca. 20 g Tetrahydrofuran wurde das Gemisch größtenteils homogen. Anschließend wurden die unlöslichen Feststoffanteile und Salze abfiltriert und das Filtrat bei 30°C / 1 mbar eingeengt. Man erhielt 12 g eines orangen Feststoffs.

**Patentansprüche**

1. Übergangsmetallhaltige Organosiloxane aus mindestens drei Organosiloxaneinheiten, welche mindestens einen chemisch über Liganden, die ausgewählt werden aus Amino-, Phosphino- oder Sulfidogruppen gebundenen Übergangsmetallkomplex von Pt, Pd, Rh, Ru, Os oder Ir enthalten, wobei die Organosiloxane, welche ausschließlich über Aminoliganden gebundene Pt(0)-Komplexe enthalten, ausgenommen sind.

2. Übergangsmetallhaltige Organosiloxane nach Anpruch 1, welche mindestens einen chemisch gebundenen Übergangsmetallkomplex von Pt, Pd, Rh, Ru, Os oder Ir enthalten und welche aus mindestens drei Einheiten der allgemeinen Formel 6,

$$G_mR_nSiO_{\frac{4-n-m}{2}} \quad (6),$$

aufgebaut sind, in der

**G** einen Rest der allgemeinen Formel 7,

$$MY_hZ_i \quad (7),$$

bedeutet, wobei

**M** Pt, mit Ausnahme von Pt(0), Pd, Rh, Ru, Os oder Ir ist,

**Y** gleich oder verschieden ist und einen Liganden ausgewählt aus der Gruppe von Cl, Br, I, $NH_3$, $PR_3$, H, CO, 1,5-Cyclooctadien, Pyridin, Bipyridin, Acetat, Acetylacetonat, Phenylnitril, Ethylendiamin, Acetonitril, 2,5-Norbornadien, Nitrat, Nitrit, $H_2O$, Benzol, Diphenylphosphinoethan, 1,3-Divinyl-1,1,3,3-tetramethyldisiloxan und Alkene mit 1 bis 18 Kohlenstoffatomen,

**Z** gleich oder verschieden ist und einen Ligandenrest ausgewählt aus der Gruppe von Sp-$NR^3_2$, Sp-$NR^3(R^4)NR^3_2$, Sp-4-Pyridin, Sp-4-Bipyridin, Sp-$PR^3(R^4)PR^3_2$, Sp-$PR^3_2$, Sp-$POR^3_2$, Sp-$P(OR^3)_2$ und Sp-$SR^3$,

**$R^3$** ein Wasserstoffatom oder einen Rest **R**,

**$R^4$** einen zweiwertigen Kohlenwasserstoffrest mit 1 bis 8 Kohlenstoffatomen je Rest,

**Sp** einen zweiwertigen, SiC-gebundenen, gegebenenfalls substituierten Kohlenwasserstoffrest mit 1 bis 18 Kohlenstoffatomen je Rest,

**R** einen einwertigen, gegebenenfalls substituierten Kohlenwasserstoffrest mit 1 bis 18 Kohlenstoffatomen je Rest,

**h** eine ganze Zahl von 1 bis 8,

**i** 1, 2, 3 oder 4 und

**m** und **n** gleich oder verschieden sind, jeweils 0 oder eine ganze Zahl von 1 bis 3 bedeuten und $n + m \geqq 1$ sind, mit der Maßgabe, daß mindestens ein Rest G im Organosiloxan vorhanden ist.

**3.** Hydrosilylierungsverfahren, wobei
(A) Verbindungen, die Reste mit aliphatischen Kohlenstoff-Kohlenstoff-Mehrfachbindungen aufweisen, mit
(B) Si-gebundenen Wasserstoffatomen aufweisenden Verbindungen, die ausgewählt werden aus Silanen oder Siloxanen, oder anstelle von (A) und (B)
(C) Verbindungen die aliphatische Kohlenstoff-Kohlenstoff-Mehrfachbindungen und Si-gebundene Wasserstoffatome aufweisen, in Gegenwart von
(D) übergangsmetallhaltigen Organosiloxanen gemäß Anspruch 1 oder 2 als Hydrosilylierungskatalysator umgesetzt werden.

**4.** Organopolysiloxanzusammensetzung, enthaltend
(A) Verbindungen, die Reste mit aliphatischen Kohlenstoff-Kohlenstoff-Mehrfachbindungen aufweisen,
(B) Si-gebundenen Wasserstoffatome aufweisende Verbindungen, die ausgewählt werden aus Silanen oder Siloxanen, oder anstelle von (A) und (B)
(C) Verbindungen, die aliphatische Kohlenstoff-Kohlenstoff-Mehrfachbindungen und Si-gebundene Wasserstoffatome aufweisen, und
(D) als Hydrosilylierungskatalysator übergangsmetallhaltige Organosiloxane gemäß Anspruch 1 oder 2.

**5.** Verfahren zur Herstellung von übergangsmetallhaltigen Organosiloxanen aus mindestens drei Organosiloxaneinheiten, welche mindestens einen chemisch über Liganden, die ausgewählt werden aus Amino-, Phosphino- oder Sulfidogruppen gebundenen Übergangsmetallkomplex von Pt, Pd, Rh, Ru, Os oder Ir enthalten,
wobei eine Übergangsmetallverbindung der Zentralatome Pt, Pd, Rh, Ru, Os und Ir, welche mindestens einen schwachen Liganden besitzt, der nach der spektrochemischen Reihe unterhalb von Amino-, Phosphino-und Sulfidoliganden steht,
mit einem Organosiloxan aus mindestens drei Organosiloxaneinheiten, das mindestens eine gebundene Amino-, Phosphino- oder Sulfidogruppe besitzt, umgesetzt wird.

**6.** Verfahren nach Anspruch 5, zur Herstellung von Organosiloxanen, welche aus mindestens drei Einheiten der allgemeinen Formel 8

$$A_mR_nSiO_{\frac{4-n-m}{2}} \qquad (8),$$

aufgebaut sind, in der

**A** einen Rest der allgemeinen Formel 9,

$M^1Y_hZ_i$ (9),

bedeutet, wobei

Übergangsmetallverbindungen der allgemeinen Formel 10,

$M^1Y_hX_k$ (10),

mit Organosiloxanen aus mindestens drei Einheiten der allgemeinen Formel 11,

$$Z_mR_nSiO_{\frac{4-n-m}{2}} \qquad (11),$$

umgesetzt, werden, wobei

**M¹** Pt, Pd, Rh, Ru, Os oder Ir ist,

**X** gleich oder verschieden ist und einen Liganden ausgewählt aus der Gruppe von Cl, Br, I, H, CO, 1,5-Cyclooctadien, Acetat, Acetylacetonat, Phenylnitril, Acetonitril, 2,5-Norbornadien, Nitrat, Nitrit, $H_2O$, Benzol, Diphenylacetylen, Ethylen, 1-Octen, 1-Hexen und 1,3-Divinyl-1,1,3,3-tetramethyldisiloxan,

**k** 1, 2, 3 oder 4 bedeuten und

**Y**, **Z**, **R**, **h**, **i**, **m** und **n** die vorstehenden Bedeutungen aufweisen.

Europäisches Patentamt

# EUROPÄISCHER RECHERCHENBERICHT

Nummer der Anmeldung
EP 94 11 1383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Derwent Publications Ltd., London, GB;<br>AN 84-053240<br>& JP-A-5 912 760 (SHINETSU CHEM. IND. KK.)<br>21. Januar 1984<br>* Zusammenfassung * | 1 | C08G77/398<br>C08K5/00<br>C07F15/00 |
| A | US-A-5 187 134 (PETER PANSTER)<br>* Ansprüche 1,6,12 *<br>* Spalte 1, Zeile 8 - Zeile 21 * | 1 | |
| A | EP-A-0 072 435 (DEGUSSA AKTIENGESELLSCHAFT)<br>* Ansprüche 1,3 *<br>* Seite 1, Zeile 15 - Zeile 20 *<br>* Seite 5, Zeile 3 - Seite 7, Zeile 26 * | 1 | |
| A | EP-A-0 061 241 (MMM)<br>* Ansprüche 1,3 * | 1 | |
| D,A | US-A-4 398 010 (JAMES R. ADKINS)<br>* Anspruch 1 *<br>* Spalte 2, Zeile 30 - Zeile 45 * | 1 | **RECHERCHIERTE SACHGEBIETE (Int.Cl.6)**<br>C08G<br>C08K<br>C07F<br>C08L |

Der vorliegende Recherchenbericht wurde für alle Patentansprüche erstellt

| Recherchenort | Abschlußdatum der Recherche | Prüfer |
|---|---|---|
| DEN HAAG | 2. Dezember 1994 | Depijper, R |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument